# DEMANDE DE BREVET EUROPEEN

(11) **EP 1 962 007 A1**
(43) Date de publication de la demande: **27.08.2008**
(21) Numéro de dépôt: 07300809.6
(22) Date de dépôt: 22.02.2007
(51) Int. Cl.: F16L 19/02, F16L 19/025, F16L 47/04, G01F 1/78, G01F 15/18

(54) **Joint d'étanchéité pour bâche de compteur de fluide**

(71) Demandeur: Actaris SAS, 92100 Boulogne (FR)
(72) Inventeur: Bouzid, Tarek, 71000 Macon (FR)
(74) Mandataire: Lenne, Laurence

(57) **Abrégé**

L'invention concerne un joint d'étanchéité (J1, J2) pour bâche (1) de compteur de fluide destiné à être disposé entre une surface d'extrémité annulaire d'une tubulure d'entrée (1A) ou de sortie (1 B) de cette dernière et une surface d'extrémité annulaire d'une conduite (3) d'arrivée ou d'évacuation du fluide.

Selon l'invention, ce joint est solidaire de l'une des dites surfaces d'extrémité.

## Description

L'invention concerne un joint d'étanchéité pour bâche de compteur de fluide, en particulier d'eau.

Un compteur de fluide et en particulier d'eau est composé d'une bâche constituée d'un élément de réception d'un élément de mesure telle qu'une turbine par exemple et d'un totalisateur de comptage. Cet élément de réception est pourvu de deux tubulures filetées à leur extrémité, l'une d'entrée et l'autre de sortie du fluide, qui sont connectées à une conduite d'arrivée et à une conduite d'évacuation du fluide. Cette connexion est réalisée par une bague de serrage, par exemple en alliage cuivreux, venant buter contre une bride de la conduite et vissée sur la tubulure correspondante.

Un joint d'étanchéité est disposé entre la surface d'extrémité annulaire de la tubulure d'entrée ou de sortie de la bâche et la surface d'extrémité annulaire de la conduite d'arrivée ou d'évacuation correspondante. Le vissage de la bague de serrage sur la tubulure assure la compression du joint contre les deux surfaces d'extrémité et théoriquement l'étanchéité de la connexion.

Cependant, compte tenu des intervalles de tolérance des différentes côtes et des écarts de forme ou de position des surfaces intervenant dans cette étanchéité, le joint peut être déporté radialement lors de la mise en place de la connexion et dans un cas extrême venir en contact relativement limité sur une certaine zone, avec la surface d'extrémité de la tubulure ou des conduites. Ceci est préjudiciable, car peut entraîner une fuite de fluide à cet endroit.

Pour résoudre ce problème, l'invention propose un joint d'étanchéité pour bâche de compteur de fluide destiné à être disposé entre une surface d'extrémité annulaire d'une tubulure d'entrée ou de sortie de cette dernière et une surface d'extrémité annulaire d'une conduite d'arrivée ou d'évacuation du fluide, caractérisé en ce qu'il est solidaire de l'une des dites surfaces d'extrémité.

Selon un mode de réalisation préféré de l'invention, le joint est solidaire de ladite surface d'extrémité de ladite tubulure.

Le joint peut être partiellement encastré dans ladite surface d'extrémité de ladite tubulure.

Selon une application préférée pour bâche en matière plastique, le joint est surmoulé sur ladite surface d'extrémité de ladite tubulure.

L'invention concerne également une bâche de compteur de fluide, en matière plastique, équipée d'au moins un joint tel que précisé ci-dessus.

L'invention est décrite ci-après plus en détail à l'aide de figure ne représentant qu'un mode de réalisation préféré de l'invention.

La figure 1 est une vue en perspective d'un compteur de fluide conforme à l'invention.

La figure 2 est une vue en perspective d'une bâche d'un compteur de fluide, conforme à l'invention.

La figure 3 est une vue en coupe longitudinale de cette même bâche.

La figure 4 est une vue de détail en coupe longitudinale de cette même bâche, connectée à une conduite d'alimentation ou d'évacuation de fluide.

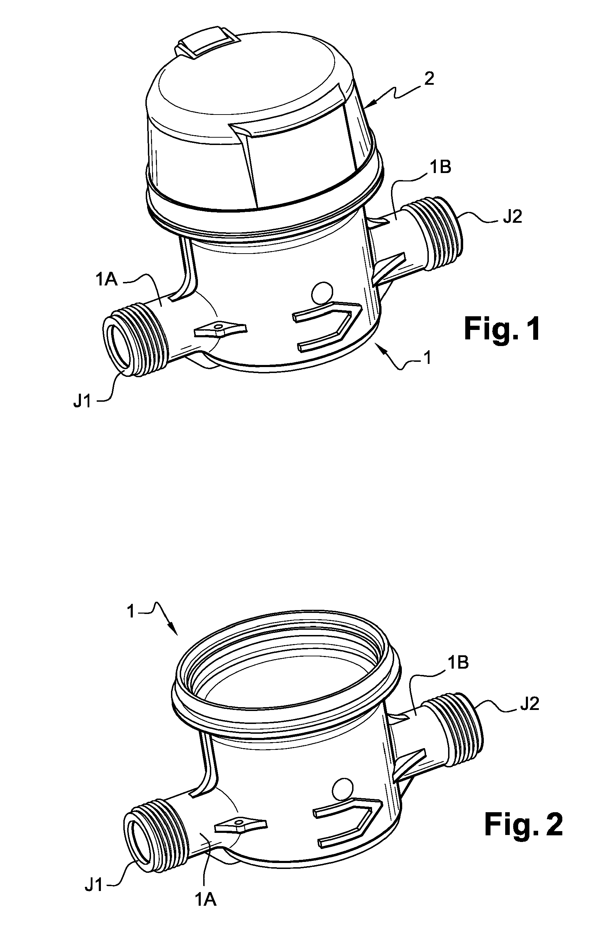

Comme visible sur les figures 1 à 3, un compteur de fluide, en particulier d'eau, est composé d'une bâche 1 constituée d'un élément de réception d'un élément de mesure telle qu'une turbine par exemple et d'un totalisateur de comptage 2. Cet élément de réception est pourvu de deux tubulures filetées à leur extrémité, l'une d'entrée 1 A et l'autre de sortie du fluide 1 B, qui sont destinées à être connectées à une conduite d'arrivée et à une conduite d'évacuation du fluide.

Un joint d'étanchéité J1, J2 est destiné à être disposé entre la surface d'extrémité annulaire de la tubulure d'entrée 1A et/ou de la tubulure de sortie 1 B de la bâche 1 et une surface d'extrémité annulaire d'une conduite d'arrivée ou d'évacuation du fluide.

Ces joints, ici au nombre de deux, l'un J1 sur la tubulure d'entrée 1A et l'autre J2 sur la tubulure de sortie 1 B, sont solidaires de la surface d'extrémité de la tubulure correspondante.

L'invention s'applique particulièrement à une bâche en matière plastique et les joints J1 et J2 sont surmoulés sur la surface d'extrémité de la tubulure correspondante.

A titre d'exemple, une telle bâche 1 peut être réalisée en matière thermoplastique telle que les polyphtalamides (PPA), les polyphénylènes oxydes (PPO) ou les polysulfures de phénylène (PPS). Ces matières thermoplastiques peuvent être renforcées de fibre de verre ou d'autres adjuvants structurels ou thermiques.

Le joint surmoulé sur la bâche peut également être en matière thermoplastique par exemple en polyoxydeméthylène (POM), en acrylonitrile-butadiène-styrène (ABS), en polyamide (PA) ou en polyéthylène basse ou haute densité. De préférence, la matière pour le joint est moins dure que celle de la bâche. Cette souplesse relative permet au joint de mieux assurer l' étanchéité.

Le joint peut également être injecté et être constitué de silicone ou d'élastomère tel que les EPDM ou les caoutchouc de nitrile butadiène.

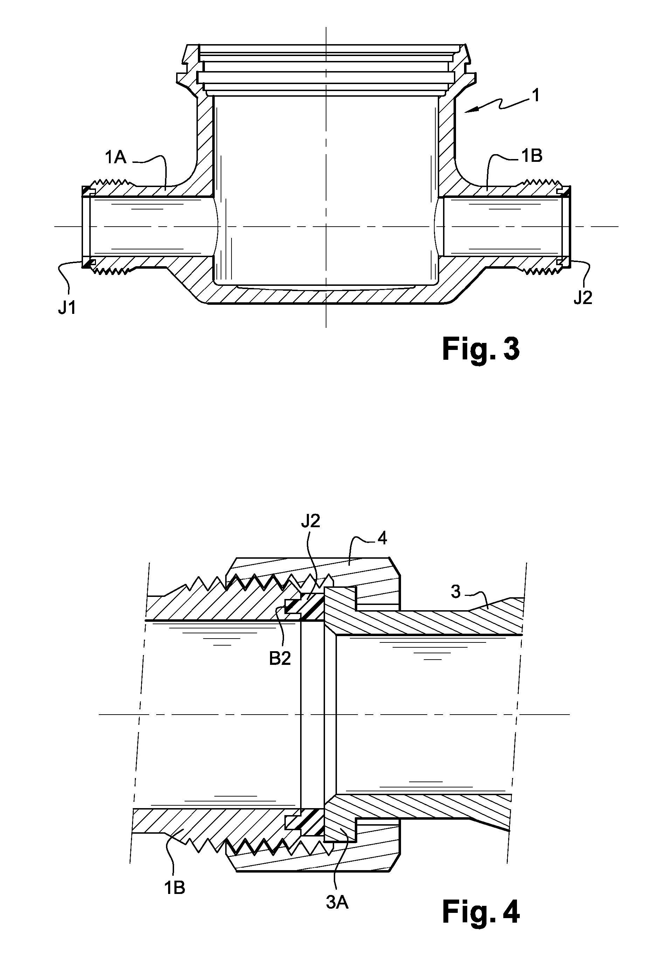

La figure 4 représente la connexion d'une des tubulures, ici la tubulure de sortie 1 B de la bâche, avec une conduite 3 d'évacuation du fluide.

Cette connexion est réalisée au moyen d'une bague de serrage 4, par exemple en alliage cuivreux, venant buter contre une bride 3A de la conduite et vissée sur la tubulure de sortie 1 B.

Le joint J2 est ici encastré partiellement dans la surface d'extrémité annulaire de la tubulure de sortie 1 B au moyen d'une bride B2 annulaire encastrée dans une rainure annulaire agencée sur la surface d'extrémité de la tubulure 1 B. Cet encastrement peut prendre la forme d'un anneau ou d'une couronne d'ergots cylindriques et régulièrement répartis sur la surface d'extrémité de la tubulure 1 B.

La profondeur minimale de l'encastrement dépend de la liaison chimique qui peut avoir lieu entre les matériaux de la bâche 1 B et du joint J2. Cette liaison est d'autant plus forte que les compositions chimiques des deux matériaux sont proches. Plus cette liaison chimique et forte, plus la profondeur d'encastrement peut être faible voire nulle. Un encastrement profond permet de palier à une éventuelle faiblesse de la liaison chimique en assurant une liaison mécanique par adhérence.

Bien que précédemment, il soit décrit un agencement où le joint est solidaire de la tubulure de la bâche, toujours dans le cadre de l'invention, il peut être utilisé un agencement où le joint est solidaire de la surface d'extrémité de la conduite d'alimentation ou d'évacuation, selon le même principe.

## Revendications

1. Joint d'étanchéité (J1, J2) pour bâche (1) de compteur de fluide destiné à être disposé entre une surface d'extrémité annulaire d'une tubulure d'entrée (1A) ou de sortie (1B) de cette dernière et une surface d'extrémité annulaire d'une conduite (3) d'arrivée ou d'évacuation du fluide, **caractérisé en ce qu'**il est solidaire de l'une des dites surfaces d'extrémité.

2. Joint selon la revendication 1, **caractérisé en ce qu'**il est solidaire de ladite surface d'extrémité de ladite tubulure (1 A, 1 B).

3. Joint d'étanchéité selon la revendication précédente, **caractérisé en ce qu'**il est partiellement encastré dans ladite surface d'extrémité de ladite tubulure (1A, 1B).

4. Joint pour bâche en matière plastique, selon la revendication 2 ou 3, **caractérisé en ce qu'**il est surmoulé sur ladite surface d'extrémité de ladite tubulure (1 A, 1 B).

5. Bâche de compteur de fluide, en matière plastique, équipée d'au moins un joint (J1, J2) selon l'une des revendications précédentes.

## Revendications modifiées

### Revendications modifiées conformément à la règle 137(2) CBE.

**1.** Bâche de compteur de fluide équipée d'au moins un joint (J1, J2) destiné à être disposé entre une surface d'extrémité annulaire d'une tubulure d'entrée (1A) ou de sortie (1 B) de cette dernière et une surface d'extrémité annulaire d'une conduite (3) d'arrivée ou d'évacuation du fluide, **caractérisé en ce que** ledit joint est solidaire de l'une des dites surfaces d'extrémité.

**2.** Bâche selon la revendication 1, **caractérisé en ce que** ledit joint est solidaire de ladite surface d'extrémité de ladite tubulure (1A, 1 B).

**3.** Bâche selon la revendication 1 ou 2, **caractérisé en ce qu'**il est partiellement encastré dans ladite surface d'extrémité.

**4.** Bâche, selon la revendication 1 ou 2, **caractérisé en ce que** ledit joint est surmoulé sur ladite surface d'extrémité.

**5.** Bâche selon l'une des revendications précédentes, **caractérisé en ce qu'**elle est en matière plastique.
